## Europäisches Patentamt

## European Patent Office

## Office européen des brevets

(11) Veröffentlichungsnummer: **0 186 105**
**B1**

(12) **EUROPÄISCHE PATENTSCHRIFT**

(45) Veröffentlichungstag der Patentschrift: **16.05.90**

(51) Int. Cl.⁵: **B 60 R 22/42**

(21) Anmeldenummer: **85116127.3**

(22) Anmeldetag: **18.12.85**

(54) Selbstsonsorische Klemmvorrichtung für ein Sicherheitsgurtsystem.

(30) Priorität: **21.12.84 DE 3446981**

(43) Veröffentlichungstag der Anmeldung:
**02.07.86 Patentblatt 86/27**

(45) Bekanntmachung des Hinweises auf die
Patenterteilung:
**16.05.90 Patentblatt 90/20**

(84) Benannte Vertragsstaaten:
**DE FR GB IT**

(56) Entgegenhaltungen:
**EP-A-0 173 903**
**WO-A-85/03676**
**GB-A-2 073 008**
**GB-A-2 084 000**
**US-A-4 120 466**
**US-A-4 208 770**

(73) Patentinhaber: **Autoliv-Kolb GmbH & Co.**
**Theodor-Heuss-Strasse 2**
**D-8060 Dachau (DE)**

(72) Erfinder: **Ernst, Hans-Hellmut**
**Eschenweg 4**
**D-2061 Sülfeld (DE)**

(74) Vertreter: **Eitle, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Beschreibung

Die Erfindung bezieht sich auf eine selbstsensorische Klemmvorrichtung für ein Sicherheitsgurtsystem, mit einem das Gurtband beim Auftreten bestimmter Beschleunigungskräfte klemmenden Klemmglied, dem unmittelbar ein von den genannten Beschleunigungen angetriebener Ansprechsensor zugeordnet ist.

Eine derartige selbstsensorische und unabhängige Klemmvorrichtung (EP—PS 0087 499, EP—PS 0056 894 und US—PS 4 360 171) kann im Zusammenhang mit einem Aufroller oder einer anderen Einrichtung zum Speichern eines Gurtbandvorrates in Verbindung stehen. Das Entscheidende dabei gegenüber einem normalen Aufroller, welcher nicht mit einer Klemmvorrichtung gekoppelt ist, ist ein deutlich kürzerer Gesamtgurtbandauszug bei einer Blockierung unter Last (Unfall). Dies liegt im wesentlichen daran, daß sich der sogenannte Filmspuleffekt nicht auswirken kann.

Der selbstsensorische Klemmer gemäß der EP—PS 0087 499 umfaßt einen CS-Sensor, der in Abhängigkeit von Fahrzeugbeschleunigungen und Fahrzeugverzögerungen anspricht, dabei aber direkt die Masse der Klemmorgane betätigt. Eine derartige Reaktion ist im übrigen nur in Fahrzeuglängsrichtung möglich, also beim Frontal- und Heckaufprall. Ein WS-Sensor ist nicht vorgesehen.

Die EP—PS 0056 894 betrifft eine selbstsensorische Klemmvorrichtung, die oberhalb eines konventionellen selbstsperrenden Aufrollers angeordnet ist.

Dort betätigt der Sensor ein kurz vor dem oberen Totpunkt gespanntes Hebelgestänge. Es handelt sich also dabei um einen Sensor, der nur bei größeren Verzögerungen (beim Unfall) anspricht. Auch hier stammt die gesamte Energie zum Aktivieren des Klemmorgans aus der Sensormechanik. Außerdem ist ein besonderer Hebel zum Entsperren in die Ausgangslage erforderlich.

Ein anderer selbstsensorischer Klemmer, wie er aus der US—PS 4 360 171 bekannt ist, umfaßt einen CS-Sensor, der ebenfalls direkt die Masse der Klammteile betätigt, so daß durch den Sensor eine relativ große Betätigungskraft ausgeübt werden muß. Auch dieser Klemmer beinhaltet keinen WS-Sensor. Er arbeitet also nur einfachsensitiv.

Aus der GB—A—2 073 008 ist eine Klemmvorrichtung für ein Sicherheitsgurtsystem bekannt, bei dem die Klemmung dadurch bewirkt wird, daß über eine fahrzeugsensitive Sensorkugel die Wickelwelle gesperrt und dadurch eine vom Gurtband teilumschlungene Umlenkrolle verschoben wird. Diese Verschiebung bewirkt den Eingriff einer Verzahnung der Umlenkrolle mit der Verzahnung eines Schwenkhebels, der, angetrieben vom Gurtband, über die Umlenkrolle ein Drehmoment erhält. Dadurch erzeugt der Schwenkhebel eine Kraft auf ein Klemmglied und bringt dieses in Anlage an das Gurtband. Dies bedeutet, daß die Klemmkraft ständig über die Umlenkrolle, den Schwenkhebel und das bewegliche Klemmglied erzeugt wird.

In der nicht vorveröffentlichten EP—A2 0 173 903 ist ein Klemmsystem mit einer schwenkbaren Klemmbacke und einem festen Klemmstück beschrieben, zwischen denen das Gurtband geradlinig vom Gurtaufroller herkommend geführt ist. Die Klemmbacke wird durch eine gehäuseseitig abgestützte Druckfeder in der offenen Position gehalten.

Zwischen der beweglichen Klemmbacke und der Umfangslinie des Gurtaufrollers ist ein zweiarmiger Hebel schwenkbar so angeordnet, daß er in der Öffnungsstelle der Klemmvorrichtung mit einem Hebelarm an der Klemmbacke und mit dem anderen Hebelarm am ablaufenden Gurtband anliegt, wozu am vorderen Ende des Hebels eine Rolle angeordnet ist.

Im Normalbetrieb kann das Gurtband durch die Klemmvorrichtung hindurchgezogen werden, ohne daß diese anspricht, weil die Druckfeder die bewegliche Klemmbacke in Öffnungstellung hält. Kommt es nach der Strammung des Gurtbandes durch eine nicht dargestellte, auf den Gurtaufroller wirkende Straffvorrichtung zu einem Anwachsen der Auszugskraft, so schwenkt die Rolle mit dem Hebel entgegen der Kraft der Feder längs des Gurtverlaufes nach innen, wodurch der Hebel die bewegliche Klemmbacke mit dem Klemmstück in Eingriff bringt. Die Klemmbewegung wird nach Eingriff der Klemmteils durch die weiterhin wirkende Zugkraft am Gurtband selbsthemmend verstärkt.

Daher liegt der Erfindung die Aufgabe zugrunde, eine selbstsensorische Klemmvorrichtung der eingangs genannten Art zu schaffen, bei der nicht nur die Klemmwirkung möglichst schnell einsetzt, um so den Gurtbandauszug soweit wie möglich zu minimieren, soderen bei dem auch nur eine relativ geringe, vom Sensor ausgehende Kraft ausreicht, um die Klemmwirkung hervorzurufen.

Diese Aufgabe wird erfindungsgemäß dadurch gelöst, daß durch den Ansprechsensor ein mit dem Gurtband in Berührung gelangendes, die Klemm-Machanik in Klemmbereitschaft bringendes Vorsteuerelement so mit dem Klemmglied in Wirkverbindung steht, daß das Vorsteuerelement durch seine vom Gurtband verursachte Bewegung im Falle einer Aktivierung das Klemmglied in Anlage an das Gurtband bringt.

Die Aufgabe wird weiterhin gurtbandsensitiv dadurch gelöst, daß der Ansprechsensor ein gurtbandsensitiver (WS) Ansprechsensor ist, und daß der gurtbandsensitive Ansprechsensor aufgrund einer die Klemm-Mechanik in Klemm bereitschaft bringenden, nachgiebigen Gurtbandumlenkung durch die Gurtbandstreckung aktvierbar ist, wobei die Kraftkomponenten im Gurtband ab einer bestimmten Gurtkraft, die sich aus der Gurtauszugsbeschleunigung und dem Trägheitswiderstand ergibt, die Klemmaktivierung auslösen, und das Klemmglied in Anlage an das Gurtband bringen.

Das Vorsehen eines Vorsteuerelements, welches sehr leicht und in geringer Masse dimensioniert werden kann, erfordert vom Sensor nur eine geringe Betätigungskraft, so daß der Sensor selbst im wesentlichen auf die an sich ihm zustehenden Anforderungen abgestellt und dimensioniert werden kann, damit ein optimales Ansprechen bei den gewünschten Verzögerungen und Beschleunigungen gewährleistet ist. Dieses System spricht nicht nur in allen Richtungen an, sondern auch in der Überkopflage. Dabei können die sensorischen Steuerungselemente klein und leicht gehalten werden, so daß eine sichere Klemmblockierung bei jeder Verzögerung über 0,45 g (CS) bzw. 1,5 g (WS) gewährleistet ist.

Für die Hauptsperrung (Gurtblockierung), Klemmung etc. werden lastaufnehmende Teile (Sperrglieder) aus einer Ruhelage in eine Sperrlage verfahren. Die Kraft dafür wird aus dem ausziehenden Gurtband abgeleitet, das über Kupplungsglieder (Sensormechanik) das Sperrglied oder die Sperrglieder in die Blockierstellung überführt.

Der Ansprechsensor kann ein fahrzeugsensitiver oder ein gurtbandsensitiver Ansprechsensor sein. Es besteht aber auch die Möglichkeit, den Ansprechsensor in Kombination als gurtbandsensitiver und als fahrzeugsensitiver Ansprechsensor auszubilden und somit die selbstsensorische Klemmvorrichtung doppelsensitiv zu gestalten, die Klemmblockierung also sowohl von einer gurtbandsensitiven Aktivierung (WS) als auch von einer fahrzeugsensitiven Aktivierung (CS) aus zu ermöglichen, wobei die Bereitschaft zur Klemmblockierung bei allen Beschleunigungen über 0,45 g (CS) und 1,5 g (WS) gegeben ist.

Der fahrzeugsensitive Ansprechsensorkörper ist bevorzugt eine Kugel, die bei ihrer Bewegung aus der normalen Ruhelage indirekt, nämlich über das Vorsteuerelement auf das Klammglied einwirkt.

Das gurtbandsensitive System ist ein beschleunigungsabhängiges Trägheitssystem, das ebenfalls indirekt über einen Betätigungshebel auf das gleiche Vorsteuerelement auf Schwenkhebel und Klemmglied einwirkt oder in einer alternativen Ausführungsform, über eine federvorgespannte Umlenkung auf das Klemmglied einwirkt.

Für eine im wesentlichen ganzflächige Klemmwirkung zwischen Klemmfläche des Klemmgliedes und Gurtband bzw. einer Gegendruckfläche kann das Klemmglied gelenkig mit einem Schwenkhebel verbunden sein und mit dieser ebenflächigen Klemmfläche im Abstand vom Gurtband sich befindend an mindestens einem Anschlag anliegen. Dabei ist am Klemmglied ein Betätigungsglied drehbar angebracht, welches in Wirkverbindung mit dem fahrzeugsensitiven Ansprechsensor derart steht, daß dieser das Betätigungsglied in Anlage an das Gurtband drückt und eine Schwenkbewegung des Schwenkhebels bewirkt, durch den die Klemmfläche in Anlage an das Gurtband gelangt.

Vorzugsweise ist das Vorsteuerelement als am Klemmglied drehbar angebrachter Vorsteuerhebel ausgebildet, der bei seinem Abstützen am Gurtband ein Stützmoment auf das Klemmteil und somit auf den Schwenkhebel überträgt.

Das Vorsteuerelement kann aber auch als eigendrehgelagerter, vorzugsweise auf der Drehachse des Schwenkhebels gelagerter Vorsteuerhebel ausgebildet sein. Dieser Vorsteuerhebel ist zweckmäßigerweise in einer Nut des Schwenkhebels bewegbar angeordnet, so daß eine kompakte Gesamtausbildung vorgesehen ist. Auf der der Nut abgewandten Seite des Schwenkhebels ist eine eine bestimmte Bewegung des Vorsteuerhebels zulassender Mitnehmer am Schwenkhebel angeordnet, so daß der Vorsteuerhebel den Schwenkhebel und somit das Klemmteil mitnimmt und gegen das Gurtband drückt, wenn das Gurtband nach der Kontaktnahme mit dem Vorsteuerhebel diesen entsprechend einer Schwenkbewegung bewegt. Ist das Klemmteil erst einmal in Kontakt mit dem Gurtband, so setzt ein Selbstverstärkungseffekt ein und die Aufgabe des Vorsteuerhebels ist damit abgeschlossen.

Der Vorsteuerhebel ist vorzugsweise mit zwei Ansätzen versehen, von denen der eine mit einem fahrzeugsensitiven Sensor und der andere mit einem gurtbandsensitiven Sensor in Wirkungsbindung steht, wobei beide Sensoren unabhängig voneinander auf den Vorsteuerhebel einwirken. Dabei kann einer der Ansätze den Schwenkhebel durchragen, weil zweckmäßigerweise der fahrzeugsensitive Sensor auf der Gurtbandspeicherseite und der gurtbandsensitive Sensor auf der davon abgewandten Seite des Sensors auf derselben Seite des Gurtbandes angeordnet ist, wobei der dem fahrzeugsensitiven Sensor zugeordnete Ansatz als Stößel (wird gestoßen) und der dem gurtbandsensitiven Sensor zugeordnete Ansatz als Zugelement (wird gezogen) ausgebildet sein kann.

Damit beispielsweise der gurtbandsensitive Sensor die Betätigung durch den fahrzeugsensitiven Sensor nicht behindert, ist im genannten Zugelement ein Langloch ausgebildet, in dem sich ein Betätigungsstift des gurtbandsensitiven Sensors als Mitnehmer betätigt.

Am dem dem Gurtband zugewandten Ende des Vorsteuerhebels ist vorzugsweise ein begrenzt drehbares Greifelement vorgesehen. Vorzugsweise kann dieses Greifelement aus einer Greiffläche und einem daran angesetzten teilkreiszylindrischen Lagerelement bestehen, welches teilkreiszylindrische Lagerelement in eine entsprechende Ausnehmung des Vorsteuerhebels eingreift.

Das Greifelement und/oder das Klemmglied können als drehbare Teile so unter Reibhemmung drehbar sein, daß diese Teile nach dem erstmaligen Anlegen an das Gurtband und nach dem darauffolgenden Lösen davon eine solche Relativwinkelstellung zum Schwenkhebel oder Vorsteuerhebel einnehmen, daß beim Wiedereinschwenken der Greif- oder Klemmfläche diese zum Gurtband in ganzflächige Berührung gelangen.

Eine vorteilhafte Ausgestaltung ergibt sich dahingehend, daß der gurtbandsensitive Ansprechsensor aufgrund einer Gurtbandumlenkung durch die Gurtbandstreckung aktivierbar ist, wobei die Kraftkomponenten im Gurtband ab einer bestimmten Gurtkraft, die sich aus der Gurtauszugsbeschleunigung und dem Trägheitswiderstand ergibt, die Klemmaktivierung auslöst.

Bei Kombination der Klemmvorrichtung mit einem Aufrollgurtspeicher kann der gurtbandsensitive Ansprechsensor zweckmäßigerweise als Umlenkglied für das Gurtband ausgebildet sein, wobei sich dieses Umlenkglied zwischen dem Gurtspeicher und dem Klemmglied befindet. Das Umlenkglied hält das Gurtband im Normalfall in geringem Abstand von der Klemmfläche des Klemmgliedes. Bei einer bestimmten Gurtbandbeschleunigung wird das Umlenkglied so bewegt, daß die Klemmfläche des Klemmgliedes in Anlage an das Gurtband bringbar ist, worauf dieses mitgerissen wird und eine Klemmung zustande kommt.

Dabei kann die Gurtbandumlenkung als gurtbandsensitiver Ansprechsensor federelastisch vorgespannt in Richtung auf das Gurtband und von diesem weg bewegbar sein.

In weiterer Ausgestaltung kann die Klemmfläche des Klemmgliedes unmittelbar neben dem gurtbandsensitiven Ansprechsensor als elastischer Einsatz mit hohem Reibungsbeiwert ausgebildet sein.

Das Umlenkglied kann auch von einem Schenkel eines drehbaren Winkelhebels gebildet sein, dessen anderer Schenkel mit dem Schwenkhebel in Wirkverbindung steht.

In einer besonders exakt ansprechenden Ausführungsform umfaßt der gurtbandsensitive Sensor vorteilhafterweise einen schwenkbar gelagerten Betätigungshebel, dem ein mit dem Gurtband stets mitlaufendes Drehteil zugeordnet ist. Ein darin integrierter, an sich bekannter Trägheitsmechanismus kann das Drahteil mit dem Betätigungshebel kuppeln, so daß gurtbandsensitiv der Vorsteuerhebel aktiviert wird.

Eine zweckmäßige Ausgestaltung ergibt sich dadurch, daß die selbstsensorische Klammvorrichtung mit einem Aufroller zu einem Aufrollklemmer und mit einem Umlenker zu einem Umlenkklemmer kombinierbar ist, und dadurch daß der Umlenker aus dem Gehäuse der Klemmvorrichtung gebildet wird.

Weitere Einzelheiten, Merkmale und Vorteile der Erfindung ergeben sich aus der nachfolgenden Beschreibung der in den Zeichnungen rein schematisch dargestellten Ausführungsbeispiele. Es zeigt:

Fig. 1 eine schematische Schnittansicht durch eine Gurtbandklemmvorrichtung im Zusammenhang mit einem Aufroller als Gurtspeicher,

Fig. 2 eine Teilschnittansicht der Ausführungsform gemäß Fig. 1, jedoch mit einem gurtbandsensitiven Ansprechsensor,

Fig. 3 eine Einzelheit hinsichtlich der Klemmfläche des Klemmgliedes,

Fig. 4 eine schematische Schnittansicht durch eine gegenüber Fig. 2 abgeänderte Ausführungsform der gurtbandsensitiven Aktivierung,

Fig. 5 eine schematische Ansicht einer gegenüber Fig. 1 abgewandelten Ausführungsform eines Klemmers als selbstsensorische und unabhängige Klemmereinheit,

Fig. 6 eine Explosionsdarstellung eines Teils des Schwenkhebels,

Fig. 7 eine schematische Seitenansicht eines gurtbandsensitiven Sensors mit einer Teildarstellung des Vorsteuerhebels,

Fig. 8 ein Anordnungsbeispiel für eine selbstsensorische und unabhängig arbeitende Klemmvorrichtung und

Fig. 9 eine Schnittansicht einer B-Säule mit einem Umlenkklemmer als Kombination von selbstsensorischer Klemmvorrichtung und Umlenker.

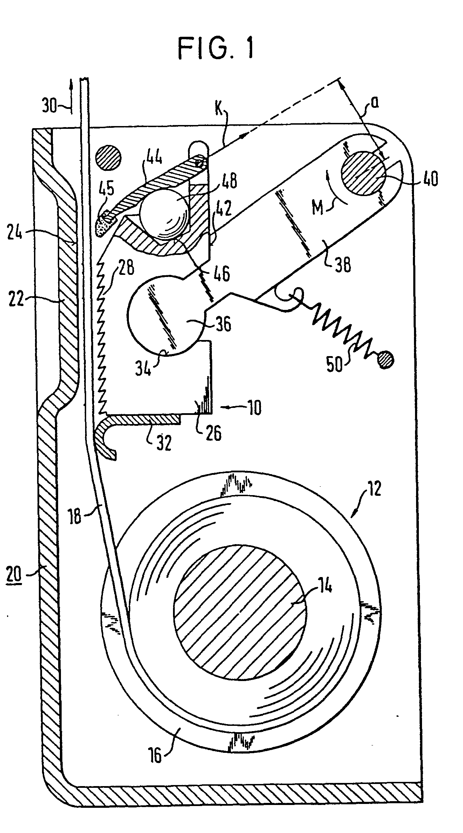

Fig. 1 zeigt schematisch die eigentliche selbstsensorische Klemmvorrichtung 10 als Sonderfall im Zusammemhang mit einem Aufrollspeicher 12. Dieser Aufrollspeicher besteht aus einer Aufwickelspule mit einem Spulenkern 14 und Spulenflanschen 16. Auf dem Spulenkern 14 ist das Gurtband 18 eines Sicherheitsgurtsystems aufgewickelt. Allerdings kann auch eine andere Vorrichtung zum Speichern eines Gurtbandvorrats vorgesehen sein, die das Gurtband mit einer bestimmten Kraft gespannt hält.

Die selbstsensorische Klemmvorrichtung 10 und der Aufroller 12 können in einem gemeinsamen Gehäuse 20 untergebracht sein, wobei im Bereich der Klemmvorrichtung eine Sicke 22 mit einer Gegendruckfläche 24 ausgebildet ist. Gegenüberliegend der Gegendruckfläche 24 befindet sich ein Klemmglied 26, welches mit einer vorzugsweise gezahnten ebenflächigen Klemmfläche 28 versehen ist. Zwischen der Gegendruckfläche 24 und der Klemmfläche 28 verläuft des Gurtband 18, welches in Richtung des Pfeiles 30 vom Aufroller 12 abgezogen wird, zwischen dem Klemmglied 26 und dem Aufroller 12 befindet sich ein Führungsglied 32, welches einerseits einen Anschlag für das Klemmglied 26 in seiner Ausgangslage bildet und das Klemmglied 26 in einem geringen Abstand vom Gurtband 18 hält.

Das Klemmglied 26 steht über eine vorzugsweise teilzylindrische, einseitig offene Ausnehmung 34 mit einen teilzylindrischen Drehzapfen 36 eines Schwenkhebels 38 in Verbindung, welcher Schwenkhebel 38 um eine Schwenkachse 40 schwenkbar ist und an seiner Oberseite einen Anschlag 42 für das Klammglied 26 bildet.

Am oberen Ende des Klemmgliedes 26 ist drehbar ein Vorsteuerhebel 44 angebracht, der im Klemmglied 26 einer Mulde 46 gegenüberliegt. In dieser Mulde liegt eine Kugel 48, auf der die Sensorklinke 44 aufliegt. Der Vorsteuerhebel weist eine Greifspitze 45 auf, die als Gummispitze oder als kleine gezahnte Fläche ausgebildet sein kann. An der Unterseite des Schwenkhebels 38 greift eine Zugfeder 50 an, die den Schwenkhebel 38 nach Beendigung des Klemmvorganges wieder in die Ausgangslage zurückholen kann. Damit dies möglichst sicher erfolgen kann, weist die Gegendruckfläche 24 einen relativ geringen Reibungsbeiwert auf.

Die Funktion der Vorrichtung gemäß Fig. 1 wird nachfolgend beschrieben. Wenn das Fahrzeug, in dem die dargestellte Vorrichtung angebracht ist, eine bestimmte Verzögerung oder Beschleunigung erfährt (bei Überschrieten von 0,45 g), so bewegt sich die Kugel 48 und bringt dadurch die Spitze 45 des Vorsteuerhebels 44 sofort ohne jede Verzögerung in Anlage an das Gurtband 18. Wenn dann mit einer gewissen Verzögerung der Fahrzeuginsasse sich nach vorne bewegt und somit das Gurtband vom Aufroller 12 abzieht, so übt das Gurtband 18 unmittelbar eine Kraft auf die den Vorsteuerhebel 44 aus, welcher in etwa die Richtung des Pfeiles K in Fig. 1 hat. Da das Klemmglied 26 am Anschlag 42 des Schwenkhebels 38 anliegt, wirkt sich diese Kraft mit dem Hebelarm a hinsichtlich eines Drehmomentes M um die Schwenkachse 40 aus, mit der Folge, daß das Klemmglied 26 mit dem unteren Rand seiner Klemmfläche 28 in Anlage an das Gurtband gelangt und dann sich das Klemmglied 26 so vom Anschlag 42 löst, daß die gesamte Klemmfläche 28 am Gurtband zur Anlage kommt und somit ganzflächig durch den Gurtbandabzug zur Auswirkung kommt.

Wenn der Gurtbandabzug aufhört, so zieht die Feder 50 das gesamte Klemmsystem wieder in die Ausgangslage zurück.

Hierbei ist von besonderer Bedeutung, daß die Klemmblockierung bei jeder Beschleunigungsüberschrietung (0,45 g bei CS und 1,5 g bei WS) stattfindet. Nur auf diese Weise lassen sich die kürzestmöglichen Gurtbandauszüge unter Last erreichen.

Je höher die Ansprechschwelle ist, desto mehr Gurtband wird bereits vor der Klemmung ausgezogen. Hierzu wird nachfolgend eine Angabe darüber gemacht, bei welchen Beschleunigungen die Geräte ansprechen.

a) 0,45 g/1,5 g=Betriebssituation bei normaler Fahrzeugnutzung (=starkes Bremsen, starke Kurvenfahrt, schnelle Schulterbewegung des Insassen)

b) ca. 2—3 g (leichte Karambolagen)

c) ab 5 g (Beginn eines deutlichen Unfalls)

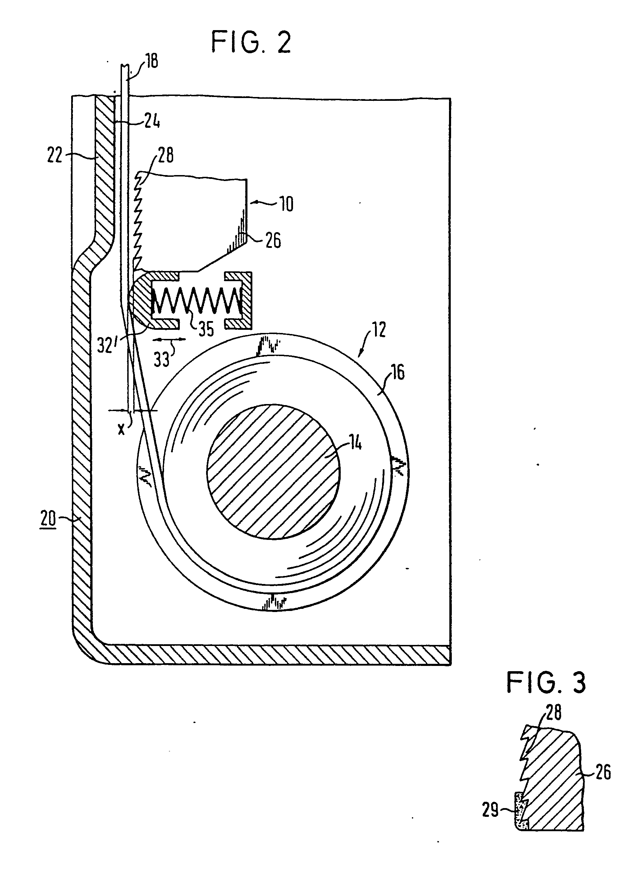

Fig. 2 zeigt ein mit der Fig. 1 vergleichbares System, und zwar unter Verwendung des Führungsgliedes 32' als gurtbandsensitiven Ansprechsensor, welche entweder für sich oder in Kombination mit dem in Fig. 1 dargestellten fahrzeugsensitiven Ansprechsensor verwendet werden kann. Dieses Führungsglied 32' hat somit eine Dreifachfunktion, nämlich die Funktion der Bildung eines Anschlags für das Klemmglied 26, eine Umlenk- bzw. Führungsfunktion für das Gurtband 18 und eine Funktion als gurtbandsensitiver Ansprechsensor.

Das Führungsglied 32' ist entsprechend dem Doppelpfeil 33 in Fig. 2 hin- und herbewegbar angeordnet, und zwar entgegen der Druckfeder 35. Diese Feder 35 ist so ausgelegt, daß das Führungsglied 32' das Gurtband 18 in einem geringen Abstand x zur Klemmfläche 28 hält.

Dieser gurtbandsensitive Ansprechsensor funktioniert so, daß bei einer Gurtbandauszugsbeschleunigung von 1 bis 1,5 g die Feder 35 so zusammengedrückt wird, daß das Gurtband in hemmende Berührung mit der Klemmfläche 28 des Klemmgliedes 26 gelangt. Dies hat zur Folge, daß die Klemmbacke vom Gurtband mitgenommen wird und somit die gewünschte Klemmwirkung direkt und unverzüglich einsetzt.

Fig. 3 zeigt eine besondere Ausgestaltung der Klemmfläche 28 des Klemmgliedes 26. Im unteren Bereich der Klemmfläche 28, d.h. unmittelbar neben dem Führungsglied 32' findet sich ein Gummieinsatz 29, welcher schonend die erste Eingriffnahme zwischen Gurtband und Klemmglied bewirkt, wenn sich bei der genannten Beschleunigung des Gurtbandauszuges das Führungsglied 32' in Fig. 2 nach rechts bewegt (CS+WS).

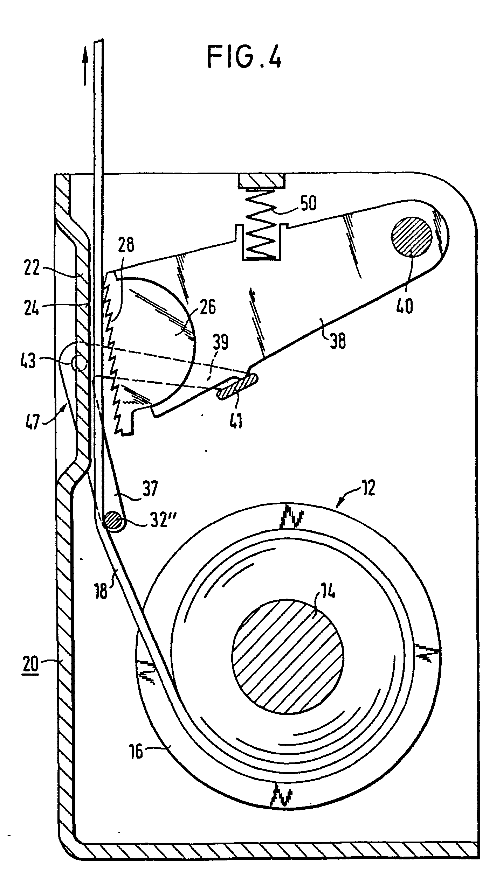

Bei der in Fig. 4 dargestellten Ausführungsform einer gurtbandsensitiven Bewegung des Klemmgliedes 26 zusammen mit dem Schwenkhebel 38 befindet sich die eigentliche Umlenkung 32'' am Ende eines Schwenkhebels 37 eines Winkelhebels 47, der bei 43 drehgelagert ist. Am Ende des anderen Schenkels 39 befindet sich eine Mitnehmerplatte 41.

Insbesondere wenn das Gurtband 18 von der Spule 12 abgespult wird und eine bestimmte Abzugsbeschleunigung des Gurtbandes erfolgt, so drückt das Gurtband das Umlenkglied 32'' in der Zeichnung nach rechts, so daß der Winkelhebel 47 eine Drehung im Gegenuhrzeigersinn vollzieht. Dabei nimmt der Mitnehmer 41 den Schwenkhebel 38 mit und bringt die Klemmfläche 28 des Klemmgliedes 26 in Berührung mit dem Gurtband 18, womit die sensorische Einleitung der Klemmblockierung abgeschlossen ist.

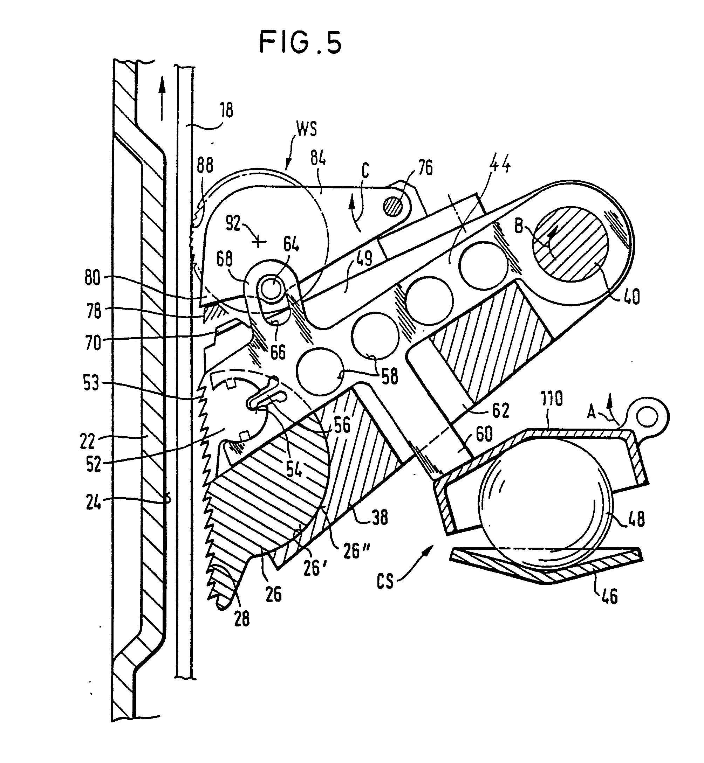

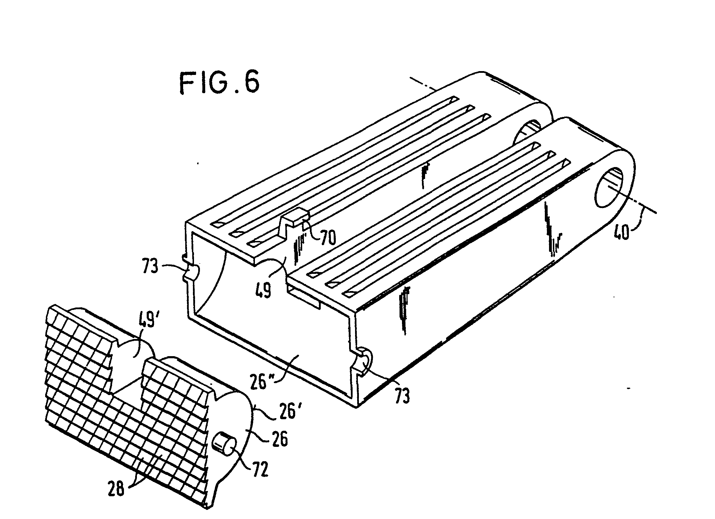

Soweit die Ausführungsform gemäß Fig. 5 mit der in Fig. 1 übereinstimmt, sind gleiche Bezugszeichen verwendet, obwohl diese Teile ein wenig anders konstruiert sind. Im Schwenkhebel 38 befindet sich eine besser aus Fig. 6 ersichtliche nach außen hin offene Nut 49 sowie ein damit fluchsender Schlitz 49' im Klemmglied 26. Entsprechend der Darstellung in Fig. 5 ist auf der Schwenkachse 40 des Schwenkhebels 38 der bereits bekannte Vorsteuerhebel 44 dargestellt. Da die Nut 49 nach oben hin offen ist, ist zwar dieser Vorsteuerhebel 44 im wesentlichen im Schwenkhebel 38 eingebettet, aber in dieser Nut um die Schwenkachse 40 schwenkbar. An der Schwenkachse 40 entgegengesetzten Ende weist dieser Vorsteuerhebel ein Greifelement 52 auf, welches in diesem Vorsteuerhebel ähnlich sitzt und arbeitet wie das Klemmglied 26 im Schwenkhebel 38. Vorzugsweise ist dieses Greifelement 52, welches eine gezahnte Grifffläche 53 aufweist, in eine Ausnehmung des Vorsteuerhebels so eingeschnappt, daß dieses Greifelement 52 zwar um eine zur Zeichenebene senkrechte Achse drehbar, jedoch in Richtung dieser Achse nicht bewegbar ist. Die letztgenannte Bewegungshinderung kann dabei auf verschiedene Weise so bewerkstelligt werden, daß eine möglichst geringe Breite des Vorsteuerhebels in diese Achsrichtung möglich ist. Hierzu kann beispielsweise der Vorsteuerhebel in Richtung auf das Innere der genannten Ausnehmung einen Vorsprung aufweisen, der in eine entsprechende Radialausnehmung des Lagerteils des Greifelementes eingreift. Das Greifelement 52 kann mit seinem vorzugsweise teilkreiszylindrischen Lagerteil so mit Reibung in der Ausnehmung sitzen, daß das Greifelement 52 in der gewünschten Stellung verbleibt. Dadurch ist es möglich, die Winkelstellung des Greifelementes und seiner Greiffläche 53 so zu gestelten, daß sich das Greifelement beim Anlegen mit seiner Greiffläche 53 an das Gurtband in diese Stellung relativ zum Vorsteuerhebel 44 ausrichtet und dann beim Wegbewegen vom Gurtband in dieser Stellung verbleibt, so daß stets bei den nächsten Annäherungsbewegungen an das Gurtband die Greiffläche sofort mit ihrer ganzen Fläche am Gurtband zur Anlage kommt. Dasselbe kann im Zusammenhang mit dem Klemmglied 26 bewirkt werden.

Wenn es gewünscht ist, das Greifelement 52 stets in einer bestimmten Stellung zu halten, so kann entsprechend der Darstellung in Fig. 5 das Greifelement mit einem der Greiffläche 53 abgewandten Seite mit einer Schlitzausnehmung 54 versehen sein, in die eine elastisch verformbare Zunge 56 des Vorsteuerhebels eingreift, wenn das Greifelement 52 in die an Ende des Vorsteuerhebels 44 befindliche Ausnehmung eingeschnappt ist.

Das Greifelement 52 ragt durch die Schlitzausnehmung 49' des Klemmgliedes 26 und kann so bei kompakter Ausgestaltung einfach in Anlage mit dem Gurtband gebracht werden.

Der Vorsteuerhebel weist zur Verringerung seiner Masse Erleichtungsbohrungen 58 auf.

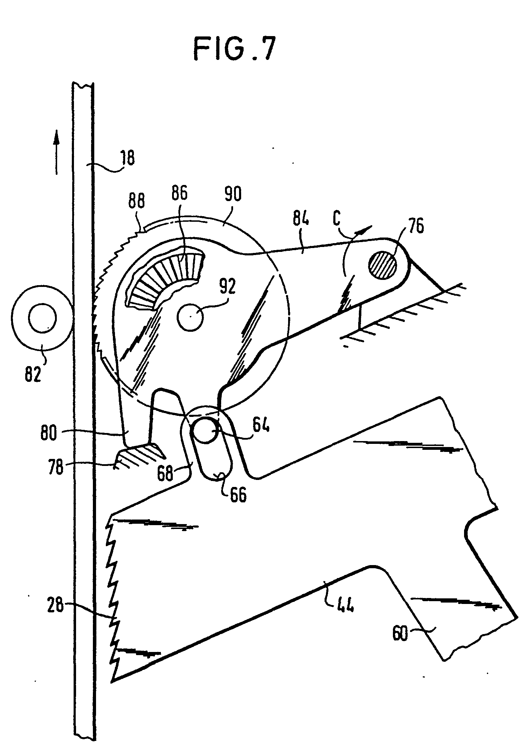

Unterhalb des Schwenkhebels 38 befindet sich der fahrzeugsensitive Sensor CS mit der Pfanne 46, der Kugel 48 und der von der Kugel unmittelbar betätigten Sensorklinke 11c. Diese Sensorklinke 11c wirkt auf einen Stößel 60 am unteren Ende des Vorsteuerhebels 44, der durch eine Durchgangsöffnung 62 des Schwenkhebels 38 ragt. Auf der entgegengesetzten Seite des Schwenkhebels 38 befindet sich ein gurtbandsensitiver Sensor WS, der in Fig. 7 detaillierter dargestellt ist. Dieser gurtbandsensitive Sensor ragt mit einem Stift 64 in das Langloch 66 eines Ziehelementes 68 des Vorsteuerhebels 44 ein.

Die Greiffläche 53 des Greifelementes 52 weist vorzugsweise zwei nebeinanderliegende Reihen von feinen Zähnen auf, die entgegen der Abzugsrichtung des Gurtbandes 18 gepfeilt sind, um ein wirksameres Erfassen des Gurtbandes zu bewirken.

Wie aus Fig. 6 ersichlich ist, weist der Schwenkhebel 38 außerhalb der Nut 49 einen Mitnehmer 70 auf, an dem die Oberseite des Vorsteuerhebels 44 im Falle eines Aktivierungshubes zur Anlage kommt.

Wie Fig. 6 zu entnehmen ist, liegt das Klemmelement 26 nicht nur mit seinem teilkreiszylindrischen Lagerteil 26' in der entsprechenden Mulde 26'' des Schwenkhebels 38. Außerdem weist das Klemmteil 26 stirnseitig Lagerzapfen 72 auf, die in Lagerschalen 73 des Schwenkhebels 38 so liegen, daß dort die Lastaufnahme beim fahrzeugsensitiven und gurtbandsensitiven Test und beim Dauertest erfolgt. Die Lastaufnahme nach Deformation der beiden Lagerzapfen ab ca. 1 kN erfolgt dann in der Mulde 26''.

Die Beschreibung des in Fig. 5 schematisch dargestellten gurtbandsensitiven Sensors WS erfolgt anhand von Fig. 7. Dort ist ein Mitnehmer 84 in einer Achse 76 am Schwenkhebel 38 drehbar gelagert. Auf einer Achse 92 dieses Mitnehmers dreht sich eine WS-Kapsel 90 mit einer Außenverzahnung 88, die stets in das Gurtband 18 eingreift, so daß sich diese Kapsel dreht, wenn das Gurtband bewegt ist. Am Mitnehmer 84 befindet sich eine Rastverzahnung 86, mit der eine nicht dargestellte massenträgheitsgestuerte Sperrklinke in Eingriff gelangen kann, wenn das Gurtband mit einer ein vorbestimmtes Maß überschreitenden Beschleunigung abgezogen wird, so daß dadurch der Mitnehmer 84 mit der WS-Kapsel 90 so gekuppelt wird, daß das Gurtband bei seiner weiteren Bewegung ein Verschwenken des Mitnehmers in Richtung des Pfeiles C, d.h. im Uhrzeigersinn bei Betrachtung der Fig. 7, bewirkt.

Auf der der WS-Kapsel 90 entgegengesetzten Seite des Gurtbandes kann noch eine federdruckbeaufschlagte Gegendruckrolle 82 angeordnet sein. Der Mitnehmer 84 ist darüber hinaus mit einem Ansatz 80 versehen, der gegen einen ortsfesten Anschlag 78 des Schwenkhebels 38 anstößt, wenn sich der WS-Sensor in seiner unbetätigten Ausgangslage befindet.

Die WS-Kapsel 90 wird mit einem gewissen Anpreßdruck gegen das Gurtband 18 gedrückt und läuft somit über die Verzahnung 88 ohne besonderen Widerstand mit dem Gurtband mit. Die Verriegelung erfolgt beispielsweise bei einem Gurtbandauszug zwischen 1,0 g und 1,5 g.

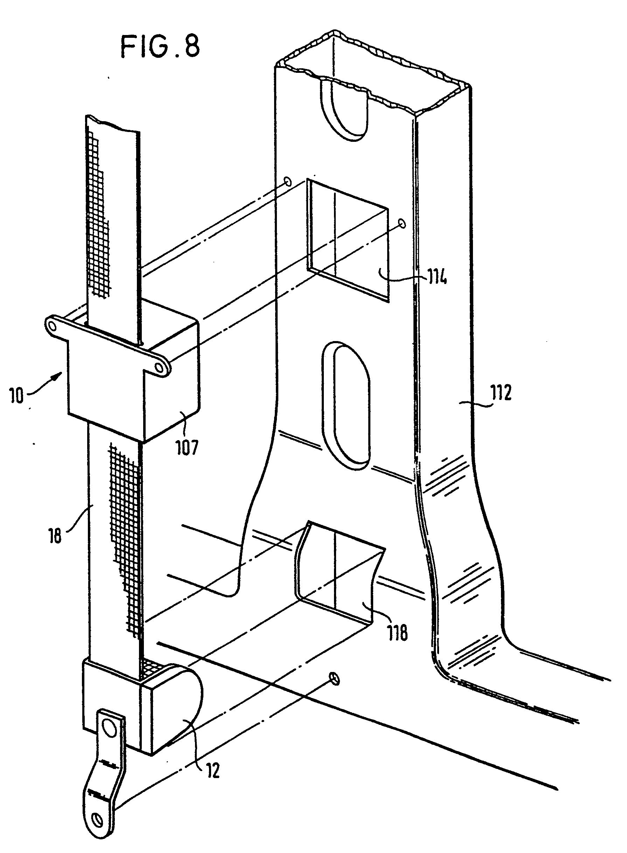

Diese Ausführungsform hat den Vorteil, daß eine direkte Abhängigkeit der Auslösung von der Gurtbandbeschleunigung erfolgt. Man hat immer die gleiche Ansprechempfindlichkeit, da eine Unabhängigkeit vom Gurtwinkel, der Drehwinkelbeschleunigung der Welle oder dem Wickeldurchmesser gegeben ist. Die Blockierung ist mit kurzen Gurtauszügen möglich, das erfindungsgemäß jede Sensoraktivierung eine Klemmbereitschaft einleitet. Außerdem besteht eine variable Anordnungsmöglichkeit in Verbindung mit einer kleinen Baueinheit. Im Übrigen ist diese kompakte Baueinheit insbesondere bei der Ausführungsvariante gemäß Fig. 5 gegeben. Diese Klemmvorrichtung beinhaltet einen wesentlichen Erfindungsgedanken. Sie ist zweifach selbstsensorisch und unabhängig—somit autark—und läßt sich an jeder beliebigen Stelle zwischen Türschwelle und Umlenkbeschlag einbauen, wie die Fig. 8 sehr deutlich zeigt.

Wenn bei Betrachtung der Fig. 5 der gurtbandsensitive Sensor WS durch eine bestimmte Gurtbandbeschleunigung aktiviert wird, bewegt sich der Mitnehmer 84 im Uhrzeigersinn entsprechend dem in Fig. 5 dargestellten Pfeil C, wobei der Stift 64 den Vorsteuerhebel 44 entsperchend dem Pfeil B im Uhrzeigersinn verschwenkt und somit die Greiffläche 53 des Greifelementes 52 in Anlage am Gurtband 18 mit der Folge bringt, daß das Gurtband eine Kraft auf den Vorsteuerhebel 44 derart ausübt, daß eine weitere Bewegung gemäß dem Pfeil B erfolgt. Wegen des Mitnehmers 70 erfolgt dadurch bedingt eine Bewegung des Schwenkhebels 38 in derselben Richtung, so daß die Klemmfläche 28 des Klemmgliedes 26 mit dem Gurtband in Berührung gelangt.

Bei einer fahrzeugsensitiven Auslösung durch den Sensor S bewirkt eine Bewegung der Kugel 48 ein Anheben der Steuerklinke 110 über den Stößel 60 ebenfalls eine Bewegung des Vorsteuerhebels 44 entsprechend dem Pfeil B, so daß der gleiche Vorgang wie zuvor abläuft. Das Langloch 66 verhindert eine Behinderung dieser Bewegung durch den Sensor WS.

Die Fig. 8 zeigt, wie der Klemmer 10 mit seinem Gehäuse 107 unabhängig von anderen Einrichtungen, wie dem Aufroller 12, oder einem nicht dargestellten Umlenker, beispielsweise in der sogenannten B-Säule, untergebracht werden. Diese B-Säule 112 weist hierzu eine Montageöffnung 114 auf. Eine Montageöffnung 118 befindet sich im unteren Teil der B-Säule zum Einsetzen und Montieren des Aufrollers 12. Dieser selbstsensorische Klemmer als eigenständige, autarke Einheit, die unabhängig vom Aufrollautomaten (Speicher) zwischen Aufroller und Umlenker beliebig plaziert werden kann, stellt eine sehr wesentliche Alternative zu einem selbstsperrenden Aufrollautomaten, einen Aufrollklemmer bzw. einen Umlenkklemmer dar.

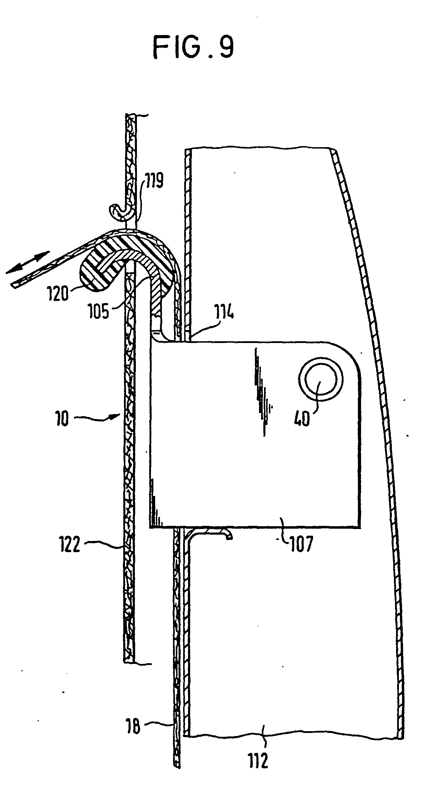

Fig. 9 zeigt den Klemmer 10 in integraler Ausgestaltung mit einem Umlenker, welcher im Zusammenhang mit einem in der Verkleidung der B-Säule 112 ausgebildeten Schlitz 119 zusammenwirkt, indem der Umlenker 105 Bestandteil des Gehäuses 107 des Klemmers 10 ist. Dieser Umlenker 105 ist im dargestellten Beispiel noch mit einem Kunststoffaufsatz 120 versehen. Die genannte Verkleidung hat das Bezugszeichen 122.

**Patentansprüche**

1. Selbstsensorische Klemmvorrichtung für ein Sicherheitsgurtsystem, mit einem das Gurtband beim Auftreten bestimmter Beschleunigungskräfte klemmenden Klemmglied, dem unmittelbar ein von den genannten Beschleunigungen angetriebener Ansprechsensor zugeordnet ist, dadurch gekennzeichnet, daß durch den Ansprechsensor ein mit dem Gurtband (18) in Berührung gelangendes, die Klemm-Mechanik (26, 38) in Klemmbereitschaft bringendes Vorsteuerelement (44) so mit dem Klemmglied (26) in Wirkverbindung steht, daß das Vorsteuerelement (44) durch seine vom Gurtband (18) verursachte Bewegung im Falle einer Aktivierung das Klemmglied (26) in Anlage an das Gurtband (18) bringt.

2. Klemmvorrichtung nach Anspruch 1, dadurch gekennzeichnet, daß der Ansprechsensor ein fahrzeugsensitiver Ansprechsensor ist.

3. Klemmvorrichtung nach Anspruch 1 oder 2, dadurch gekennzeichnet, daß das Klemmglied gelenkig mit einem Schwenkhebel (38) verbunden ist, sich mit seiner vorzugsweise ebenflächigen Klemmfläche (28) im Abstand vom Gurtband (18) befindet und an mindestens einem Anschlag (32; 42) anliegt.

4. Klemmvorrichtung nach Anspruch 3, dadurch gekennzeichnet, daß das Vorsteuerelement (44) schwenkbar am Klemmglied (26) angebracht ist und die vom Gurtband (18) auf das Vorsteuerelement ausgeübte Kraft eine Richtung hat, die eine Schwenkbewegung des Schwenkhebels (38) mit dem Klemmglied (26) auf das Gurtband (18) zu verursacht.

5. Klemmvorrichtung nach Anspruch 4, dadurch gekennzeichnet, daß das Vorsteuerelement als am Klemmglied (26) schwenkbar angebrachter Vorsteuerhebel (44) ausgebildet ist.

6. Klemmvorrichtung nach Anspruch 1 oder 2, dadurch gekennzeichnet, daß das Vorsteuerelement (44) als eigendrehgelagerter, vorzugsweise auf der Drehachse (40) des Schwenkhebels (38) gelagerter Vorsteuerhebel ausgebildet ist.

7. Klemmvorrichtung nach Anspruch 6, dadurch gekennzeichnet, daß der Vorsteuerhebel (44) in einer Nut (50) des Schwenkhebels (38) bewegbar angeordnet ist und auf der der Nut abgewandten Seite ein eine bestimmte Bewegung des Vorsteuerhebels zulassender Mitnehmer (70) am Schwenkhebel (38) angeordnet ist.

8. Klemmvorrichtung nach Anspruch 6 oder 7, dadurch gekennzeichnet, daß der Vorsteuerhebel (44) mit einem durch den Schwenkhebel (38) ragenden Betätigungsansatz (60) versehen ist, der mit dem Sensor in Wirkverbindung steht.

9. Klemmvorrichtung nach einem der Ansprüche 5 bis 8, dadurch gekennzeichnet, daß an der dem Gurtband zugewandten Seite des Vorsteuerhebels (44) ein begrenzt drehbares Greifelement (52) angeordnet ist.

10. Klemmvorrichtung nach Anspruch 9, dadurch gekennzeichnet, daß das Greifelement (52) und/oder das Klemmglied (26) als drehbares Teil so unter Reibhemmung drehbar ist, daß dieses Teil nach dem erstmaligen Anlegen an das Gurtband (18) und nach dem darauffolgenden Lösen davon eine solche Relativwinkelstellung zum Schwenkhebel (38) oder Vorsteuerhebel (44) einnimmt, daß beim Wiederanlegen die volle Greif- oder Klemmfläche mit dem Gurtband in Berührung gelangt.

11. Klemmvorrichtung nach Anspruch 1, dadurch gekennzeichnet, daß der Ansprechsensor ein gurtbandsensitiver Ansprechsensor ist.

12. Klemmvorrichtung nach Anspruch 1 und 11, dadurch gekennzeichnet, daß der gurtbandsensitive Sensor (WS) einen schwenkbar gelagerten Betätigungshebel (84) umfaßt, dem ein mit dem Gurtband stets mitlaufendes Drehteil (90) zugeordnet ist, und daß über einen an sich bekannten Trägheitsmechanismus das Drehteil (90) mit dem Betätigungshebel (84) so kuppelbar ist, daß eine Relativdrehung des Drehteils (90) zum Betätigungshebel (84) vermieden wird, so daß ein formschlüssig gekuppelter Verband vom Gurtband (18) ausgehend besteht über das WS-Drehteil (90), den Betätigungshebel (84), den Mitnehmerstift (64), dem Langloch (66) des Vorsteuerhebels (44) bis zum Mitnehmer (70) des Schwenkhebels (38).

13. Klemmvorrichtung nach einem der Ansprüche 1, 3 bis 10, dadurch gekennzeichnet, daß ein Vorsteuerelement (44) so mit einem fahrzeugsensitiven und einem gurtbandsensitiven Ansprechsensor verbunden ist, daß es durch den fahrzeugsensitiven und/oder den gurtbandsensitiven Ansprechsensor in Berührung mit dem Gurtband (18) gelangt.

14. Klemmvorrichtung nach Anspruch 13, dadurch gekennzeichnet, daß der Vorsteuerhebel (44) mit zwei Ansätzen (60; 68) versehen ist, von denen einer mit dem fahrzeugsensitiven Sensor (CS) und der andere mit dem gurtbandsensitiven Sensor (WS) in Wirkverbindung steht, wobei beide Sensoren unabhängig voneinander auf den Vorsteuerhebel (44) einwirken.

15. Klemmvorrichtung nach Anspruch 13 und 14, dadurch gekennzeichnet, daß der fahrzeugsensitive Sensor (CS) auf der Gurtbandspeicherseite und der gurtbandsensitive Sensor (WS) auf der davon abgewandten Seite des Schwenkhebels (38) auf derselben Seite des Gurtbandes angeordnet sind, wobei der dem fahrzeugsensitiven Sensor zugeordnete Ansatz (60) als Stößel und der dem gurtbandsensitiven Sensor zugeordnete Ansatz (68) als Zugelement ausgebildet ist.

16. Klemmvorrichtung nach Anspruch 15, dadurch gekennzeichnet, daß das Zugelement (68) ein Langloch (66) aufweist, in das ein Betätigungsstift (64) des gurtbandsensitiven Sensors (WS) eingreift.

17. Selbstsensorische Klemmvorrichtung für ein Sicherheitsgurtsystem, mit einem das Gurtband beim Auftreten bestimmte Beschleunigungskräfte klemmenden Klemmglied, dem unmittelbar ein von den genannten Beschleunigungen angetriebener Ansprechsensor zugeordnet ist, dadurch gekennzeichnet, daß der Ansprechsensor ein gurtbandsensitiver (WS) Ansprechsensor ist, und daß der gurtbandsensitive Ansprechsensor aufgrund einer die Klemm-Mechanik (26) in Klemmbereitschaft bringenden, nachgiebigen Gurtbandumlenkung (32') durch die Gurtbandstreckung aktivierbar ist, wobei die Kraftkomponenten im Gurtband (18) ab einer bestimmten Gurtkraft, die sich aus der Gurtauszugsbeschleunigung und dem Trägheitsweiderstand ergibt, die Klemmaktivierung auslösen, und das Klemmglied in Anlage an das Gurtband bringen.

18. Klemmvorrichtung nach Anspruch 17, dadurch gekennzeichnet, daß der gurtbandsensitive Ansprechsensor als Umlenkglied (32') für das Gurtband (18) zwischen Gurtspeicher und Klemmglied ausgebildet ist, das das Gurtband (18) in Normalfall in geringem Abstand (x) von der Klemmfläche (28) des Klemmgliedes (26) hält und bei einer bestimmten Gurtbandbeschleunigung so bewegt, daß die Klemmfläche (28) des Klemmgliedes (26) in Anlage an das Gurtband (18) bringbar ist.

19. Klemmvorrichtung nach Anspruch 18, dadurch gekennzeichnet, daß der gurtbandsensitive Ansprechsensor (32') als Gurtbandumlenkung wirkt, federelastisch (35) in Richtung auf das Gurtband (18) vorgespannt und von diesem weg bewegbar ist.

20. Klemmvorrichtung nach Anspruch 17 bis 19, dadurch gekennzeichnet, daß die Klemmfläche (28) des Klemmgliedes (26) unmittelbar neben dem gurtbandsensitiven Ansprechsensor (32') als elastischer Einsatz (29) mit hohem Reibungsbeiwert ausgebildet ist.

21. Klemmvorrichtung nach einem der Ansprüche 1 bis 20, dadurch gekennzeichnet, daß die selbstsensorische Klemmvorrichtung (10) mit einem Aufroller (12) zu einem Aufrollklemmer und mit einem Umlenker (105) zu einem Umlenkklemmer kombinierbar ist.

22. Klemmvorrichtung nach einem der Ansrpüche 1 bis 21, dadurch gekennzeichnet, daß der Umlenker (1066 aus dem Gehäuse (107) der Klemmvorrichtung (10) gebildet wird.

**Revendications**

1. Dispositif de blocage auto-sensible pour un système de ceinture de sécurité, avec un organe de blocage bloquant la bande de ceinture en cas d'apparition de forces d'accélération déterminées, à qui est directement associé un capteur de réaction entraîné par lesdites accélérations, caractérisé en ce que, au moyen du capteur de réaction, un élément de commande préliminaire (44) venant en contact avec la bande de ceinture (18), plaçant le mécanisme de blocage (26, 38) en disponibilité au blocage, est placé en relation fonctionnelle avec l'organe de blocage (26) de telle façon qu'en cas d'activation, l'élément de commande préliminaire (44) place l'organe de blocage (26) en appui sur la bande de ceinture (18), du fait de son déplacement provoqué par la bande de ceinture (18).

2. Dispositif de blocage selon la revendication 1, caractérisé en ce que le capteur de réaction est un capteur de réaction sensible au véhicule.

3. Dispositif de blocage selon la revendication 1 ou 2, caractérisé en ce que l'organe de blocage est relié de manière articulé à un levier pivotant (38), sa face de blocage (28) qui est de préférence plane se trouvant à distance de la bande de ceinture (18), et s'appuie sur au moins une butée (32; 42).

4. Dispositif de blocage selon la revendication 3, caractérisé en ce que l'élément de commande préliminaire (44) est monté pivotant sur l'organe de blocage (26) et que la force exercée sur l'élément de commande préliminaire par la bande de ceinture (18) provoque un mouvement pivotant du levier pivotant (38) avec l'organe de blocage (26) sur la bande de ceinture (18).

5. Dispositif de blocage selon la revendication 4, caractérisé en ce que l'élément de commande préliminiaire est un levier de commande préliminaire (44) monté pivotant sur l'organe de blocage (26).

6. Dispositif de blocage selon la revendication 1 ou 2, caractérisé en ce que l'élément de commande préliminaire (44) est réalisé sous la forme d'un levier de commande préliminaire monté tournant, de préférence sur l'axe de rotation (40) du levier pivotant (38).

7. Dispositif de blocage selon la revendication 1 ou 2, caractérisé en ce que l'élément de commande préliminaire (44) est disposé déplaçable dans une gorge (50) du levier pivotant (38) et que, du côté opposé à la gorge, est disposé sur le levier pivotant (38) un élément d'entraînement (70) admettant un déplacement déterminé du levier de commande préliminaire.

8. Dispositif de blocage selon la revendication 6 ou 7, caractérisé en ce que le levier de commande préliminaire (44) est pourvu d'un appendice d'actionnement (60), pénétrant dans le levier pivotant (38), qui est en liaison fonctionnelle avec le capteur.

9. Dispositif de blocage selon l'une des revendications 5 à 8, caractérisé en ce qu'un élément de prise (52) susceptible de tourner de manière limitée est disposé sur le côté du levier de commande préliminaire (44) qui est tourné vers la bande de ceinture.

10. Dispositif de blocage selon la revendication 9, caractérisé en ce que l'élément de prise (52) et/ou l'élément de blocage (26) est réalisée sour la forme de partie tournante, susceptible de tourner sous l'effet du blocage par frottement, en ce qu'après un tout premier appui sur la bande de ceinture (18) et après relâchement ultérieur d'avec la bande, cette partie prend une telle position angulaire par rapport au levier pivotant (38) ou au leiver de commande préliminaire (44), que, lors d'une répétition de l'appui, la totalité de la face de prise ou de blocage vient en contact avec la bande de ceinture.

11. Dispositif de blocage selon la revendication 1, caractérisé en ce que le capteur de réaction est un capteur de réaction sensible à la bande de ceinture.

12. Dispositif de blocage selon les revendications 1 et 11, caractérisé en ce que le capteur de réaction sensible à la bande (WS) comprend un levier d'actionnement (84) monté pivotant, à qui est associée une partie tournante (90) constamment entraînée avec la bande de ceinture, et en ce que, par l'intermédiaire d'un mécanisme à inertie connu en soi, la partie tournante (90) est couplable au levier d'actionnement (84), de telle façon que soit évité toute rotation relative de la partie tournante (90) par rapport au levier d'actionnement (84), de sorte qu'il se produit une liaison par ajustement de forme en partant de la bande de ceinture (18), en passant par la partie tournante (90), le levier d'actionnement (84), la tige d'entraînement (64), le trou oblong (66) du levier de commande préliminaire (44), jusqu'à l'élément d'entraînement (70) du levier pivotant (38).

13. Dispositif de blocage selon l'une des revendications 1, 3 à 10, caractérisé en ce qu'un élément de commande préliminaire (44) est relié de telle façon, à un capteur sensible au véhicule (CS) et à un capteur sensible à la bande de ceinture (WS), qu'il vient en contact avec la bande de ceinture (18) du fait du capteur de réaction sensible au véhicule et/ou du capteur de réaction sensible à la bande de ceinture.

14. Dispositif de blocage selon la revendication 13, caractérisé en ce que le levier de commande préliminaire (4) est pourvu de deux appendices (60; 68) dont l'un est placé en liaison fonctionnelle avec le capteur sensible au véhicule (CS) et l'autre avec le capteur sensible à la bande de ceinture (WS), les deux capteurs agissant indépendamment l'un de l'autre sur le levier de commande préliminaire (44).

15. Dispositif de blocage selon les revendications 13 et 14, caractérisé en ce que le capteur sensible au véhicule (CS) est disposé du côté de la réserve de bande de ceinture et que le capteur sensible à la bande (WS) est disposé sur le côté opposé à celui-ci du levier pivotant (38), du même côté de la bande de ceinture, l'appendice (60) associé au capteur sensible au véhicule (60) étant réalisé sous la forme d'un poussoir et l'appendice (68) associé au capteur sensible à la bande de ceinture étant réalisé sous la forme d'un élément de traction.

16. Dispositif de blocage selon la revendication 15, caractérisé en ce que l'élément de traction (68) présente un trou oblong (66) dans lequel s'engage une tige d'actionnement (64) du capteur sensible à la bande de ceinture (WS).

17. Dispositif de blocage auto-sensible pour un système de ceinture de sécurité, avec un organe de blocage bloquant la bande de ceinture en cas d'apparition de forces d'accélération déterminées, à qui est directement associé un capteur de réaction entraîné par lesdites accélérations, caractérisé en ce que le capteur de réaction est un capteur sensible à la bande de ceinture (WS) et en ce que le capteur de réaction sensible à la bande de ceinture est susceptible d'être activé par la tension de la bande de ceinture, du fait d'un renvoi de direction déformable de la bande de ceinture (32), plaçant le mécanisme de blocage (26) en disponibilité au blocage, les composantes de force exercée dans la bande de ceinture (18) déclenchant l'activation de blocage à partir d'une force de ceinture déterminée, résultant de l'accélération de l'extraction de la ceinture et de la résistance par insertie, et plaçant l'organe de blocage en appui sur la bande de ceinture.

18. Dispositif de blocage selon la revendication 17, caractérisé en ce que le capteur de réaction sensible à la bande est réalisé sous la forme d'un organe de renvoi (32'), pour la bande de ceinture (18) entre la réserve de bande et l'organe de blocage, qui maintient dans le cas normal la bande de ceinture (18) à faible distance (x) de la face de blocage (28) de l'organe de blocage (26) et qui, dans le cas d'une accélération déterminée de la bande de ceinture, se déplace de telle façon que la face de blocage (28) de l'organe de blocage (26) est susceptible d'être placée en appui sur la bande de ceinture (18).

19. Dispositif de blocage selon la revendication 18, caractérisé en ce que le capteur de réaction sensible à la bande de ceinture (32') agit comme un renvoi de bande de ceinture, qu'il est précontraint, par l'élasticité d'un ressort (35), en direction de la bande de ceinture (18) et susceptible d'être éloigné de celle-ci.

20. Dispositif de blocage selon les revendications 17 à 19, caractérisé en ce que la face de blocage (28) de l'organe de blocage (26) est réalisée, directement à côté du capteur de réaction sensible à la bande de ceinture (32'), sous la forme d'un insert élastique (29) à coefficient de frottement élevé.

21. Dispositif de blocage selon l'une des revendications 1 à 20, caractérisé en ce que le dispositif de blocage auto-sensible (10) est combinable avec un enrouleur (12) pour constituer un bloquer d'enrouleur et avec un élément de renvoi (105) pour constituer un bloqueur de renvoi.

22. Dispositif de blocage selon l'une des revendications 1 à 21, caractérisé en ce que l'élément de renvoi (105) est formé à partir du boîtier (107) du dispositif de blocage (10).

## Claims

1. Self-sensing clamping device for a safety belt system with a clamping member for clamping the belt upon the occurrence of predetermined acceleration forces, which member is directly associated with a response sensor which is driven by the said accelerations, characterised in that through the response sensor a precontrol element (44), which comes into contact with the belt (18) and which brings the clamping mechanism (26, 38) into clamping readiness, is in operative contact with the clamping member (26) in such a way that, when activated, the precontrol element through its movement caused by the belt brings the clamping member (26) into contact with the belt (18).

2. Clamping device according to claim 1, characterised in that the response sensor is a car-sensitive response sensor.

3. Clamping device according to claim 1 or 2, characterised in that the clamping member is hingedly connected with a rocking lever (38), is arranged with its preferably planar clamping surface (28) spaced from the belt (18) and rests against at least one stop (32; 42).

4. Clamping device according to claim 3, characterised in that the precontrol element (44) is pivotably mounted on the clamping member (26) and the force exerted by the belt (18) on the precontrol element has a direction which causes a pivotal movement of the rocking lever (38) with the clamping member (26) towards the belt (18).

5. Clamping device according to claim 4, characterised in that the precontrol element is designed as a precontrol lever (44) which is swivelably mounted on the clamping member (26).

6. Clamping device according to to claim 1 or 2, characterised in that the precontrol element (44) is designed as an independently rotatable precontrol lever, preferably mounted on the rotary axle (40) of the rocking lever (38).

7. Clamping device according to claim 6, characterised in that the precontrol lever (44) is movably arranged in a groove (50) of the rocking lever (38), and on the side facing away from the groove a follower (70), which permits a specific movement of the precontrol lever, is arranged on the rocking lever (38).

8. Clamping device according to claim 6 or 7, characterised in that the precontrol lever (44) is provided with an actuating attachment (60) which is operatively connected with the sensor and which projects through the rocking lever (38).

9. Clamping device according to one of the claims 5 to 8, characterised in that on the side of the precontrol lever (44) facing the belt there is arranged a gripper element (52) which is rotatable within limits.

10. Clamping device according to claim 9, characterised in that the gripper element (52) and/or the clamping member (26) is rotatable under the influence of friction so that after its first engagement with the belt (18) and after its subsequent detachment therefrom, it adopts a relative angular position to the rocking lever (38) or precontrol lever (44) such that on re-engagement the total gripping or clamping surface comes into contact with the belt.

11. Clamping device according to claim 1, characterised in that the response sensor is a web-sensitive response sensor.

12. Clamping device according to claim 1 and 11, characterised in that the web-sensitive sensor (WS) comprises a swivelably rotary part (90) can be coupled with the actuating lever (84) by means of an inertial mechanism known per se, so as to prevent rotation of the rotary part (90) relative to the actuating lever (84), so that a positively coupled connection exists proceeding from the belt (18) via the WS rotary part (90), the actuating lever (84), the follower pin (64), the longitudinal slit (66) of the precontrol lever (44) as far as the follower (70) of the rocking lever (38).

13. Clamping device according to one of the claims 1, 3 to 10, characterised in that a precontrol element (44) is connected with a vehicle-sensitive and a web-sensitive response sensor in such a way that it comes into contact with the belt (18) through the vehicle-sensitive and/or the web-sensitive response sensor.

14. Clamping device according to claim 13, characterised in that the precontrol lever (44) is provided with two attachments (60; 68) of which one is operatively connected with the car-sensitive sensor (CS) and the other is operatively connected with the web-sensitive sensor (WS), both sensors acting independently of each other on the precontrol lever (44).

15. Clamping device according to claim 13 and 14, characterised in that the car-sensitive sensor (CS) is arranged on the belt storage side of the rocking lever (38) and the web-sensitive sensor (WS) is located on the side of the rocking lever away from the belt storage side on the same side of the belt, in which the attachment (60) which is associated with with the car-sensitive sensor is designed as a plunger and the attachment (68) associated with the web-sensitive sensor is designed as a traction element.

16. Clamping device according to claim 15, characterised in that the traction element (68) has a longitudinal slit (68) in which an actuating pin (64) of the web-sensitive sensor (WS) engages.

17. Self-sensing clamping device for a safety belt system with a clamping member, which clamps the belt when specific acceleration forces are present, which is directly associated with a response sensor driven by the said accelerations, characterised in that the response sensor is a web-sensitive (WS) response sensor, and that the web-sensitive response sensor, because of a flexible belt deflection (32) which brings the clamping mechanism (26) into clamping readiness, can be activated by the belt stretching, in which the force components in the belt (18) activate the clamping process at a given belt force, which is the product of the belt withdrawal acceleration and the inertial resistance, and bring the clamping member into contact with the belt.

18. Clamping device according to claim 17, characterised in that the web-sensitive response sensor is designed as a deflector member (32') for the belt (18) between the belt store and the clamping member which normally hold the belt (18) at a small distance (x) from the clamping surface (28) of the clamping member (26) and at a given belt acceleration moves it in such a way that the clamping surface (28) of the clamping member (26) can be brought to rest against the belt (18).

19. Clamping device according to claim 18, characterised in that the web-sensitive response sensor (32') acts as belt deflection, is spring-biased (35) in the direction towards the belt (18) and for movement away from it.

20. Clamping device according to claim 17 or 19, characterised in that the clamping surface (28) of the clamping member (26) is constructed directly adjacent to the web-sensitive response sensor (32') as an elastic insert (29) with a high coefficient of friction.

21. Clamping device according to one of the claims 1 to 20, characterised in that the self-sensing clamping device (10) can be combined with a winder (12) to form a winding clamp and with a deflector (105) to form a deflector clamp.

22. Clamping device according to one of the claims 1 to 21, characterised in that the deflector (105) is formed from the housing (107) of the clamping device (10).

# FIG. 1

# FIG. 2

# FIG. 3

# FIG.4

FIG.5

FIG.6

73

73

70

49

49'

26''

26'

26

72

28

40

# FIG.7

FIG.8

# FIG.9